(19) Europäisches Patentamt
European Patent Office
Office européen des brevets

(11) **EP 3 436 792 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **17714421.9**

(22) Anmeldetag: **29.03.2017**

(51) Int Cl.:
*G01L 25/00* *(2006.01)*    *G01L 3/14* *(2006.01)*

(86) Internationale Anmeldenummer:
**PCT/EP2017/057373**

(87) Internationale Veröffentlichungsnummer:
**WO 2017/167787 (05.10.2017 Gazette 2017/40)**

(54) **VORRICHTUNG ZUR ERZEUGUNG HOCHPRÄZISER DREHMOMENTE, VERFAHREN ZU DEREN ERMITTLUNG UND VERWENDUNG DERSELBEN**

DEVICE FOR PRODUCING HIGHLY PRECISE TORQUES, METHOD FOR DETERMINING SAID TORQUES, AND USE OF SAID DEVICE

DISPOSITIF POUR PRODUIRE DES COUPLES DE HAUTE PRÉCISION, PROCÉDÉ POUR LES DÉTECTER ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2016 DE 102016003960**

(43) Veröffentlichungstag der Anmeldung:
**06.02.2019 Patentblatt 2019/06**

(73) Patentinhaber:
• **Technische Universität Ilmenau**
  **98683 Ilmenau (DE)**
• **Universidade Federal De Bahia**
  **CEP: 40110-909 Salvador - BA (BR)**
• **Institutonacional de Metrologia Qualidade E Tecnologia**
  **25250-020 Rio de Janeiro (BR)**

(72) Erfinder:
• **FRÖHLICH, Thomas**
  **98693 Ilmenau (DE)**

• **THESKA, René**
  **98693 Ilmenau (DE)**
• **WINTER, Simon**
  **99887 Georgenthal (DE)**
• **LEPIKSON, Herman Augusto**
  **41613-128 Salvador-Bahia (BR)**
• **DE OLIVEIRA, Rafael Soares**
  **25685-040 Petropolis-Rio de Janeiro (BR)**

(74) Vertreter: **Kailuweit & Uhlemann Patentanwälte Partnerschaft mbB**
**Bamberger Straße 49**
**01187 Dresden (DE)**

(56) Entgegenhaltungen:
**EP-A1- 1 983 356     DE-A1-102011 120 349**

• **Kugi Et Al.: "Modelbildung", , 31. Dezember 2013 (2013-12-31), XP055367696, Gefunden im Internet: URL:http://www.acin.tuwien.ac.at/fileadmin /cds/lehre/mblg/Archiv/Modellbildung_2013. pdf [gefunden am 2017-04-26]**

EP 3 436 792 B1

**Beschreibung**

Die vorliegende Erfindung betrifft eine Vorrichtung zur Erzeugung hochpräziser Drehmomente, ein Verfahren zu deren Ermittlung sowie die Verwendung derselben.

Nach bisherigem Stand der Technik wurden bereits Laufgewichte zur Drehmomenterzeugung eingesetzt [1]. Dabei werden jedoch keine kugelförmigen Massen verwendet und die Messgenauigkeit ist relativ gering, weil nicht nur die Masse des Laufgewichtes sondern auch noch weitere Bauteile zur Drehmomenterzeugung beitragen.

Neuere Geräte nutzen statt eines Laufgewichtes Massen (vorwiegend Massestapel), die an dem mittig drehbar gelagerten Balken mit möglichst identischem Abstand zur Drehachse angehangen werden [2] und [3]. Dabei werden zuweilen die Massestapel über dehnungskontrollierte Gelenke an den Balken angehangen [DE 100 32 978 B4] oder über Blechstreifen mit dem Balken verbunden, die in manchen Ausführungen auf einen konstanten Radius zum Drehpunkt des Balkens abrollen [US 4,543,814]. Über die einstellbare Ungleichheit der beiden Gewichtskräfte kann das Drehmoment diskret erzeugt werden. Ein Nachteil dieser Vorrichtungen ist, dass der Radius, an dem die Kräfte angreifen auch bei sehr großem Aufwand nicht genau bekannt ist. Da jedoch die Messunsicherheit der Drehmomenterzeugung direkt von der Unsicherheit des Radius abhängt, ist auch bei diesen Vorrichtungen die Messgenauigkeit eingeschränkt.

Bei besonders großen Drehmomenten wird ein anderes Verfahren (z.B. bei der PTB Braunschweig) angewendet. Steuerbare Belastungserzeuger (hier zwei Spindelantriebe) arbeiten entgegengesetzt gegen einen zweiarmigen, schwimmend gelagerten Hebel. Das dabei erzeugte Drehmoment wird mittels Zug-Druck-Aufnehmer und bekanntem Abstand derer zum Drehpunkt des Hebels erfasst [4] und [DE 102 38 077 B4].

In [5] wird in einem Vorlesungsmanuskript zur Erläuterung der Euler-Lagrange-Gleichungen auf S. 65 die Berechnung des Drehmomentes einer Kugel auf einem Balken erörtert. Da es sich in der Vorlesung um Modellbildung handelt, ist das dort gezeigte Vorgehen nicht geeignet, praktische Lösungshinweise zu geben. So ist es nicht Aufgabe des Manuskripts Vorschläge zur Erzeugung hochpräziser Drehmomente zu liefern, sondern ein physikalisches Modell, mit der dabei üblichen Vernachlässigung technischer Randbedingungen, zu erläutern. [5] gibt somit keinen Hinweis zur Lösung einer Messaufgabe.

In der [EP 1 983 356 A1] wird ein ist ein selbstnachführendes Interferometer als Messeinrichtung zur Distanzmessung offenbart. Dabei wird ein Laserstrahl auf einen Retroreflektor gelenkt und der Abstand zwischen der Achse des einfallenden Strahls und der des reflektierten Strahls erfasst und über eine Nachführeinrichtung konstant gehalten. Nachteilig hierbei ist, dass der zu beobachtende Körper mit einer Reflexionsvorrichtung (Retroreflektor) ausgestattet sein muss.

Aufgabe der vorliegenden Erfindung ist es, die im Stand der Technik aufgezeigten Nachteile zu überwinden und eine Vorrichtung zur Erzeugung von hochpräzisen Drehmomenten und ein Verfahren zu deren Ermittlung bereitzustellen, mit denen frei wählbare Drehmomentwerte und -abfolgen mit hoher Auflösung und hoher Genauigkeit erzeugt und ermittelt werden können.

Erfindungsgemäß gelingt die Lösung dieser Aufgabe mit den Merkmalen der Patentansprüche 1 und 7. Vorteilhafte Ausgestaltungen der erfindungsgemäßen Lösung sind in den Unteransprüchen angegeben.

Die Erfindung wird im Folgenden anhand von Zeichnungen näher erläutert. Es zeigt:

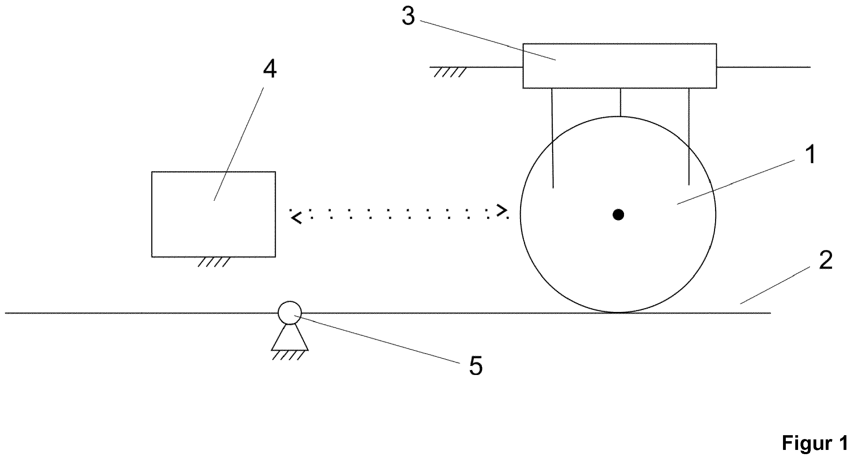

Figur 1 -    prinzipielle Darstellung der erfindungsgemäßen Vorrichtung zur Erzeugung eines hochauflösenden Drehmoments mittels kugelförmigen Laufgewichts

Figur 2 -    prinzipielle Darstellung der erfindungsgemäßen Vorrichtung mit einem Aktor zur Einstellung und Regelung der Neigung des Balkens

Die erfindungsgemäße Vorrichtung umfasst einen drehbar gelagerten Balken mit Führungscharakter (2), auf dem eine Kugel (1) mit sehr exakt bekanntem Gewicht angeordnet ist. Die Positionierung der Kugel (1) kann durch Abwälzen der Kugel (1) mit hoher Genauigkeit erfolgen. Dabei kann die Bewegung der Kugel(1) durch eine zusätzliche Positioniereinheit (3) oder aber auch durch eine direkte Regelung der Neigung des Balkens (2) erfolgen. Dabei ist es wichtig, dass einzig und allein die Kugel (1) ihre Position auf dem Balken (2) ändert und der mechanische Kontakt zwischen der Positioniereinheit (3) und der Kugel nur für kurze Zeit während der Verschiebung besteht. Im Messmodus befindet sich die Kugel im Ruhezustand und zwischen ihr und der Positioniereinheit gibt es keine Berührung. Die Position der Kugel (1) wird kontinuierlich über eine geeignete, berührungslos arbeitende, ortsfeste oder auf dem Balken (2) angebrachte Längenmesseinheit (4) hochgenau gemessen. Die Kugel (1) wirkt als Retroreflektor bei geeigneter Brechzahl des Materials oder als Spiegel bei reflektierender Oberfläche. Über die als bekannt angenommene Formgüte und den Durchmesser der Kugel kann auf die Lage des Masseschwerpunkts geschlossen werden.

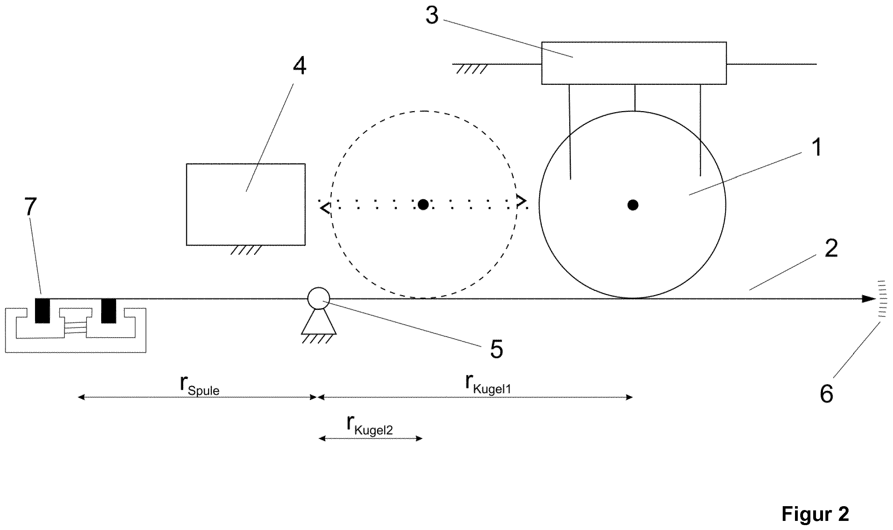

Bedingt durch die hohe Auflösung und Genauigkeit der Längenmessung in Kombination mit der Kenntnis der Masse der Kugel (1) können Drehmomente mit bisher nicht erreichter Präzision erzeugt werden. Als Lagerung für den Balken (2) werden spielfreie Lagerungen (5) mit geringster Reibung eingesetzt. Dem Fachmann sind hierfür geeignete Lagerungen geläufig. Zusätzlich kann die erfindungsgemäße Vorrichtung eine Einheit (6) zur Messung der Neigung des Balkens umfassen. Die räumliche Anordnung ist in Figur 2 nur beispielhaft dargestellt. Dem Fachmann sind hierfür geeignete Messvorrichtungen, Verfahren zu deren Betrieb und günstige Anordnungsvarianten bekannt.

Weiterhin kann die erfindungsgemäße Vorrichtung einen drehmomenterzeugenden Aktor (7) aufweisen, mit dem ein Drehmoment auf den Balken (2) in Form einer Kraft mit einem bestimmten Hebelarm vorzugsweise berührungslos erzeugt werden kann. Der Aktor (7) ist in Figur 2 als elektrodynamischer Aktor beispielhaft ausgeführt. Dem Fachmann sind auch hierfür geeignete Aktoren, Verfahren zu deren Betrieb und günstige Anordnungsvarianten bekannt.

Das erfindungsgemäße Verfahren zur Ermittlung hochpräziser Drehmomente umfasst zwei sich abwechselnde Betriebsmodi, den Messmodus und den Positioniermodus. Im Messmodus ist die Kugel (1) auf dem Balken in Ruhe und es gibt keine Berührung mit der Positioniereinheit (3). Zwischen jeweils zwei Drehmomenterzeugungen im Messmodus erfolgt im Positioniermodus das Bewegen der Kugel (1) durch die Positioniereinheit (3) oder durch Rollen bei Neigung des Balkens (2). Das im Messmodus wirkende Drehmoment hängt von der Gewichtskraft und der Position der Kugel bezüglich des Drehpunktes (5), genauer dem effektiven Radius $r_{\text{_Kugel}}$ (entspricht dem horizontalen Abstand zwischen dem Drehpunkt (5) und dem Kugelmittelpunkt) ab. Die für die messtechnische Anwendung interessante Änderung des Drehmomentes für zwei verschiedene Positionen der Kugel oder effektive Radien $r_{\text{_Kugel}}$ lässt sich durch die Längenmesseinheit (4) sehr einfach mit einer sehr hohen Messgenauigkeit messen. Die Änderung des Drehmomentes zwischen zwei Drehmomenterzeugungen im Messmodus beträgt

$$\Delta M = (r_{\text{_Kugel1}} - r_{\text{_Kugel2}}) * m * g, \qquad \text{(Gleichung 1)}$$

wobei m die Masse der Kugel, g die Fallbeschleunigung am Messort und $\Delta M$ die Änderung des Drehmomentes sind. Die Verschiebung des Mittelpunktes der Kugel entspricht bei der erfindungsgemäßen Vorrichtung genau dem Messsignal der Längenmesseinheit (4) falls eine hinreichend ideal formtreue Kugel verwendet wird.

Im Gegensatz zu den nach dem Stand der Technik bekannten Verfahren, die alle die Messung des tatsächlichen momentanen Abstands zwischen Kraftangriffspunkt und Drehpunkt messen müssen, wird beim erfindungsgemäßen Verfahren nur die sehr einfach zu messende Abstandsänderung erfasst. Sowohl formtreue Kugeln als auch berührungslose Längenmessverfahren sind in vielfach höherer Präzision verfügbar, als die Messung des momentanen Abstands zwischen Kraftangriffspunkt und Drehpunkt nach dem Stand der Technik möglich wäre.

Der in Figur 2 beispielhaft dargestellte elektrodynamischer Aktor (7) erzeugt eine zum Spulenstrom proportionale Kraft und über den Abstand $a_{\text{_Spule}}$ ein Drehmoment. Dieses kann mit der Einheit (6) zur Messung der Neigung des Balkens und einer nicht gezeigten Vorrichtung zur Einstellung oder Regelung der Neigung des Balkens auf einen festen Wert verwendet werden.

Allerdings ist die Strom-Drehmoment-Kennlinie des Aktors (7) anfänglich unbekannt. Gleichung 1 gilt bei Verwendung des Aktors (7) dann nur noch für in beiden Positionen der Kugel (1) identischen Aktorstrom. Die Verschiebung der Kugel kann jedoch auch zur Ermittlung der anfänglich unbekannten Strom-Drehmoment-Kennlinie verwendet werden. Dazu wird für zwei Kugelpositionen im Messmodus die Stromdifferenz der Ströme durch den Aktor (7) durch die Differenz der zwei zugehörigen Drehmomente dividiert. Das ermittelte Verhältnis

$$K = (I_1 - I_2) / ((r_{\text{_Kugel1}} - r_{\text{_Kugel2}}) * m * g) \qquad \text{(Gleichung 2)}$$

ist der Anstieg K der Strom-Drehmoment-Kennlinie im Arbeitspunkt. Die Strom-Drehmoment-Kennlinie ist damit auf die sehr genau messbaren Größen Wegdifferenz, Masse und Fallbeschleunigung entsprechend Gleichung 1 zurückgeführt.

Weil die Neigung des Balkens (2) sowohl beim Verschieben der Kugel im Positioniermodus als auch im Messmodus bei ruhender Kugel eingestellt oder geregelt werden kann, ist eine konstante Neigung des Balkens realisierbar.

Mit der erfindungsgemäßen Lösung lassen sich sowohl kontinuierliche Drehmomentverläufe als auch Drehmomente in diskreten Stufen erzeugen. Die diskreten Stufen der Drehmomente sind ohne Verwendung des Aktors (7) durch die Positioniergenauigkeit der Positioniereinheit (3) im Positioniermodus und die Gewichtskraft der Kugel (1) bestimmt. Dabei wird die Messgenauigkeit der Längenmesseinheit (4) sinnvollerweise um ein vielfaches besser als die Positioniergenauigkeit der Positioniereinheit (3) sein. Um möglichst kleine diskrete Stufen der einstellbaren Drehmomente zu erzielen, sind eine hohe Positioniergenauigkeit und eine kleine Masse der Kugel vorteilhaft. Durch den Fachmann ist bei bekannter Positioniergenauigkeit ein Kompromiss zwischen kleinster Schrittweite und den maximal erzeugbaren Drehmomenten durch die Wahl der Kugelmasse und der Länge des Balkens (2) wählbar.

Auch eine Kombination mehrerer abrollender Kugeln unterschiedlicher Massen ist als Ausführungsform denkbar. Die Verwendung mehrerer abrollender Kugeln ist eine günstige Ausführungsform, um die durch die Gewichtskraft erzeugten und durch die Positioniergenauigkeit bedingten diskreten Stufen der Drehmomente möglichst klein und die durch die Längenmessauflösung begrenzte Messgenauigkeit weiter zu steigern. Beträgt beispielsweise die Auflösung der Wegmessung 1 nm und die Gewichtskraft einer ersten Kugel 10 N, beträgt gemäß Gleichung 1 die Auflösung der Drehmomentenmessung 10⁻⁸ Nm. Wird zusätzliche eine um den Faktor 1000 leichtere zweite Kugel und ein zweites Wegmesssystem gleicher Auflösung verwendet, beträgt die Drehmomentenauflösung durch Verwendung beider Kugeln und einer entsprechend angepassten Gleichung 1 nun $10^{-11}$ Nm.

Zwischen den diskreten Stufen der Drehmomente durch die Positionen der Kugel im Messmodus kann eine Interpolation durch Drehmomente erfolgen, die durch den Aktor (7) erzeugt werden. Hierbei ist es für die Messunsicherheit der Drehmomentenerzeugung günstig, wenn die Strom- Drehmoment-Kennlinie wie oben beschrieben vorher bei einem größeren Abstand zweier Kugelpositionen erfolgt, beispielsweise beim maximal zulässigen positivem und negativem Aktorstrom, und der, der kleinsten Schrittweite bei 30 der Kugelpositionierung entsprechende Aktorstrom, nur ein Bruchteil des maximalen Aktorstromes beträgt.

Anhand der auf die sehr genau messbaren Größen Wegdifferenz, Masse und Fallbeschleunigung zurückgeführten, kontinuierlichen Drehmomente bietet sich der

Einsatz in Drehmoment-Normalmesseinrichtungen an. Weiterhin könnte die Erfindung Anwendung in den nationalen und internationalen Kalibrierlaboren finden.

Bezugszeichenliste

1 - Kugel
2 - Balken mit Führung
3 - Positioniereinheit
4 - berührungslos arbeitende Längenmesseinheit
5 - Drehpunkt der spielfreien Lagerung des Balkens
6- Einheit zur Messung der Neigung des Balkens
7- drehmomenterzeugender Aktor

Literaturliste

[1] - T. Allgeier, U. Kolwinski, D. Schwind (2002): "Jockey-Weight Lever Machines for Force and Torque"(IMEKO Publikation 2002)

[2] - H. Gassmann, T. Allgeier, U. Kolwinski (2000): "A new Design of PrimaryTorque Standard Machines"(IMEKO Publikation 2000)

[3] - H. W. Werner, D. Schwind (2006): "25 kNm Torque Calibration Machine reaches Ubmc = 0.008 % using new Design Features"(IMEKO Publikation 2006)

[4] - D. Peschel, D. Mauersberger, D. Schwind, U. Kolwinski (2005): "The new 1.1 MNm Torque Standard Machine of the PTB Braunschweig/Germany"(IMEKO Publikation 2005)

[5] - Kugi, A. et. al.: Vorlesung und Übung Modellbildung; Institut für Automatisierungs- und Regelungstechnik, TU Wien, SS2013.

**Patentansprüche**

**1.** Vorrichtung zur Erzeugung von Drehmomenten wobei die Vorrichtung einen spielfrei drehbar gelagerten Balken mit einer Führung (2) aufweist, **dadurch gekennzeichnet, dass** die Vorrichtung mindestens ein in der Führung abrollendes formtreues Gewicht in Kugelform (1) sowie eine berührungslos arbeitende Längenmesseinheit (4) zur Messung der Verschiebung des Gewichtsmittelpunktes aufweist.

**2.** Vorrichtung nach Anspruch 1 **dadurch gekennzeichnet, dass** die Vorrichtung eine Einheit zur Positionierung (3) des Gewichts (1) in der Führung des Balkens (2) umfasst.

**3.** Vorrichtung nach Anspruch 1 **dadurch gekennzeichnet, dass** die Vorrichtung eine Einheit (6) zur Messung der Neigung des Balkens (2) und eine Einheit zur Einstellung oder Regelung der Neigung des Balkens (2) mit einem Aktor (7) umfasst.

**4.** Vorrichtung nach Anspruch 1 **dadurch gekennzeichnet, dass** die Längenmesseinheit (4) ein Laserinterferometer ist.

**5.** Vorrichtung nach einem der vorangehenden Ansprüche **dadurch gekennzeichnet, dass** das Gewicht (1) eine reflektierende Oberfläche aufweist.

**6.** Vorrichtung nach einem der Ansprüche 1 bis 4 **dadurch gekennzeichnet, dass** das Gewicht (1) eine Oberfläche aus einem zur Retroreflektion geeignetem Material aufweist.

**7.** Verfahren zur Ermittlung von Drehmomenten mit einer Vorrichtung nach einem der Ansprüche 1 bis 6, welches sich abwechselnde Mess- und Positioniermodi umfasst, **dadurch gekennzeichnet, dass** das Verfahren mindestens zwei Messmodi und ein Positioniermodus umfasst, wobei während der Messmodi die Position des Gewichtsmittelpunktes nicht verändert und mit der Längenmesseinheit (4) die im Positioniermodus erfolgte Verschiebung des Gewichtsmittelpunktes erfasst wird und aus dem Messsignal der Längenmesseinheit (4) und der bekannten Masse des Gewichts (1) das Drehmoment ermittelt wird.

**8.** Verfahren zur Ermittlung von Drehmomenten nach Anspruch 7, **dadurch gekennzeichnet, dass** das Verfahren mit mindestens zwei verschiedenen in der Führung abrollenden formtreuen Gewichten in Kugelform (1) realisiert wird.

**9.** Verfahren nach Anspruch 7 oder 8 **dadurch gekennzeichnet, dass** die Verschiebung des Gewichtsmittelpunktes kontinuierlich oder diskontinuierlich gemessen wird.

**10.** Verfahren nach einem der Ansprüche 7 bis 9 **dadurch gekennzeichnet, dass** während des Positioniermodus die Position des Gewichtsmittelpunktes mit Hilfe einer Positioniereinheit (3) verändert wird, wobei die Positioniereinheit (3) im Messmodus das Gewicht (1) nicht berührt.

**11.** Verfahren nach einem der Ansprüche 7 bis 9 **dadurch gekennzeichnet, dass** während des Positioniermodus die Position des Gewichtsmittelpunktes durch Modifizierung der Neigung des Balkens (2) mit Hilfe eines Aktors (7) verändert wird, wobei die Neigung des Balkens (2) gemessen wird.

**12.** Verfahren nach einem der Ansprüche 7 bis 11 **dadurch gekennzeichnet, dass** die Verschiebung des Gewichtsmittelpunktes zur Ermittlung der Strom-Drehmoment-Kennlinie eines Aktors (7) verwendet wird.

**13.** Verwendung einer Vorrichtung nach einem der Ansprüche 1 bis 6 zur Ermittlung von kontinuierlichen Drehmomenten mit einem Verfahren nach einem der Ansprüche 7 bis 11 für den Betrieb von Drehmoment-Normalmesseinrichtungen.

**14.** Verwendung einer Vorrichtung nach einem der Ansprüche 1 bis 6 zur Ermittlung von diskreten Drehmomenten mit einem Verfahren nach einem der Ansprüche 7 bis 11 zur Kalibrierung von Drehmoment-Normalmessgeräten.

**Claims**

**1.** Device for generating torques, the device having a beam which is rotatably mounted without play and has a guide (2), **characterized in that** at least one true-to-shape weight in spherical form (1) rolling in the guide and a length measuring unit (4) operating without contact for measuring the displacement of the center of the weight.

**2.** Device according to claim 1 **characterized in that** the device comprises a unit for positioning (3) the weight (1) in the guide of the beam (2).

**3.** Device according to claim 1 **characterized in that** the device comprises a unit (6) for measuring the inclination of the beam (2) and a unit for adjusting or regulating the inclination of the beam (2) with an actuator (7).

**4.** Device according to claim 1 **characterized in that** the length measuring unit (4) is a laser interferometer.

**5.** Device according to any of the preceding claims **characterized in that** the weight (1) has a reflecting surface.

**6.** Device according to one of the claims 1 to 4 **characterized in that** the weight (1) has a surface of a material suitable for retroreflection.

**7.** Method for determining torques with a device according to one of claims 1 to 6, which comprises alternating measuring and positioning modes, **characterized in that** the method comprises at least two measuring modes and one positioning mode, wherein during the measuring modes the position of the centre of the weight is not changed and the displacement of the center of the weight which has occurred in the positioning mode is detected with the length measuring unit (4) and the torque is determined from the measuring signal of the length measuring unit (4) and the known mass of the weight (1).

**8.** Method for determining torques according to claim 7, **characterized in that** the method is implemented with at least two different weights in spherical form (1), which roll in the guide and are true-to-shape.

**9.** Method according to claim 7 or 8, **characterized in that** the displacement of the center of the weight is measured continuously or discontinuously.

**10.** Method according to one of claims 7 to 9, **characterized in that** during the positioning mode the position of the center of the weight is changed with the aid of a positioning unit (3), the positioning unit (3) is not touching the weight (1) in the measuring mode.

**11.** Method according to one of claims 7 to 9 **characterized in that** during the positioning mode the position of the center of weight is changed by modifying the inclination of the beam (2) with the aid of an actuator (7), the inclination of the beam (2) being measured.

**12.** Method according to any one of claims 7 to 11 **characterized in that** the displacement of the center of weight is used to determine the current-torque characteristic of an actuator (7).

**13.** Usage of a device according to one of claims 1 to 6 for determining continuous torques with a method according to one of claims 7 to 11 for the operation of torque standard measuring devices.

**14.** Usage of a device according to one of claims 1 to 6 for determining discrete torques with a method according to one of claims 7 to 11 for the calibration of torque standard measuring devices.

**Revendications**

**1.** Dispositif de génération de couples, le dispositif comportant une barre comportant un guidage (2), laquelle barre est montée de manière à pouvoir tourner sans jeu, **caractérisé en ce que** le dispositif comporte au moins un poids de forme sphérique (1) conservant sa forme d'origine et roulant dans le guidage, ainsi qu'un moyen de mesure de longueur (4) fonctionnant sans contact pour mesurer le coulissement du centre de poids.

**2.** Dispositif selon la revendication 1, **caractérisé en ce que** le dispositif comprend une unité de positionnement (3) du poids (1) dans le guidage de la barre (2).

**3.** Dispositif selon la revendication 1, **caractérisé en ce que** le dispositif comprend une unité (6) de mesure de l'inclinaison de la barre (2) et une unité de réglage ou d'ajustement de l'inclinaison de la barre (2) au moyen d'un actionneur (7).

**4.** Dispositif selon la revendication 1, **caractérisé en ce que** le moyen de mesure de longueur (4) est un interféromètre à laser.

**5.** Dispositif selon l'une des revendications précédentes, **caractérisé en ce que** le poids (1) présente une surface réfléchissante.

**6.** Dispositif selon l'une des revendications 1 à 4, **caractérisé en ce que** le poids (1) présente une surface en un matériau adapté à la rétroréflexion.

**7.** Procédé de détermination de couples au moyen d'un dispositif selon l'une des revendications 1 à 6, le procédé comprenant des modes de mesure et de positionnement alternés, **caractérisé en ce que** le procédé comprend au moins deux modes de mesure et un mode de positionnement, dans lequel la position du centre de poids ne change pas dans les modes de mesure, et le coulissement du centre de poids qui s'est produit dans le mode de positionnement est détecté à l'aide du moyen de mesure de longueur (4), et le couple est déterminé à partir du signal de mesure du moyen de mesure de longueur (4) et de la masse connue du poids (1).

8. Procédé de détermination de couples selon la revendication 7, **caractérisé en ce que** le procédé est mis en œuvre avec au moins deux différents poids de forme sphérique (1) conservant leur forme d'origine et roulant dans le guidage.

9. Procédé selon la revendication 7 ou 8, **caractérisé en ce que** le coulissement du centre de poids est mesuré de manière continue ou discontinue.

10. Procédé selon l'une des revendications 7 à 9, **caractérisé en ce que**, dans le mode de positionnement, la position du centre de poids est modifiée à l'aide d'une unité de positionnement (3), l'unité de positionnement (3) ne touchant pas le poids (1) dans le mode de mesure.

11. Procédé selon l'une des revendications 7 à 9, **caractérisé en ce que**, dans le mode de positionnement, la position du centre de poids est modifiée par la modification de l'inclinaison de la barre (2) au moyen d'un actionneur (7), l'inclinaison de la barre (2) étant mesurée.

12. Procédé selon l'une des revendications 7 à 11, **caractérisé en ce que** le coulissement du centre de poids permet de déterminer la caractéristique courant-couple d'un actionneur (7).

13. Utilisation d'un dispositif selon l'une des revendications 1 à 6 pour déterminer des couples continus au moyen d'un procédé selon l'une des revendications 7 à 11, destiné à faire fonctionner des dispositifs normalisés de mesure de couple.

14. Utilisation d'un dispositif selon l'une des revendications 1 à 6 pour déterminer des couples discrets au moyen d'un procédé selon l'une des revendications 7 à 11, permettant l'étalonnage d'appareils normalisés de mesure de couple.

Figur 1

**Figur 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032978 B4
- US 4543814 A
- DE 10238077 B4
- EP 1983356 A1

**In der Beschreibung aufgeführte Nicht-Patentliteratur**

- **T. ALLGEIER ; U. KOLWINSKI ; D. SCHWIND.** Jockey-Weight Lever Machines for Force and Torque. IMEKO Publikation, 2002
- **H. GASSMANN ; T. ALLGEIER ; U. KOLWINSK.** A new Design of Primary Torque Standard Machines. IMEKO Publikation, 2000
- **H. W. WERNER ; D. SCHWIND.** 25 kNm Torque Calibration Machine reaches Ubmc = 0.008 % using new Design Features. IMEKO Publikation, 2006
- **D. PESCHEL ; D. MAUERSBERGER ; D. SCHWIND ; U. KOLWINSKI.** The new 1.1 MNm Torque Standard Machine of the PTB Braunschweig/Germany. IMEKO Publikation, 2005
- **KUGI, A.** Vorlesung und Übung Modellbildung. Institut für Automatisierungs- und Regelungstechnik, 2013